# EUROPEAN PATENT SPECIFICATION

(11) **EP 0 358 491 B1**
(45) Date of publication and mention of the grant of the patent: **24.11.1993**
(21) Application number: 89309038.1
(22) Date of filing: 06.09.1989
(51) Int. Cl.: B60C 11/00

(54) **High speed radial tyre**
Luftreifen für hohe Geschwindigkeit
Bandage pneumatique à grande vitesse

(30) Priority: 06.09.1988 JP 223941/88
(43) Date of publication of application: 14.03.1990
(73) Proprietor: SUMITOMO RUBBER INDUSTRIES LIMITED, Kobe-shi Hyogo-ken (JP)
(72) Inventor: Ueyoko, Kiyoshi, Higashinari-ku Osaka-shi Osaka-fu (JP); Takatsu, Mikio, Takarazuka-shi Hyogo-ken (JP); Nakagawa, Tsuneyuki, Higashinada-ku Kobe-shi Hyogo-ken (JP); Noma, Hiroyuki, Kita-ku Kobe-shi Hyogo-ken (JP); Kojima, Yoshihide, Takarazuka-shi Hyogo-ken (JP)
(74) Representative: Stewart, Charles Geoffrey

(56) References cited:
- EP-A- 0 321 730
- EP-A- 0 323 208
- FR-A- 2 483 854
- GB-A- 2 092 964
- PATENT ABSTRACTS OF JAPAN, vol. 8, no. 61 (M-284)[1498], 23rd March 1984;
- & JP-A-58 211 902 (SUMITOMO GOMU KOGYO K.K.) 09-12-1983

## Description

The present invention relates to a high speed tyre which can be used for aircraft and high speed passenger cars.

Such tyres now run at speeds above 300km/h and because they have a rigid belt layer the side walls and the bead deform significantly. Because the bead apex is made of rubber which has a relatively large hardness and generates much heat due to deformation, the bead regions in use of the tyre have a high temperature from the repeated deformations and since it is thick and the carcass and reinforcement layers are concentrated there, an interlayer shearing strain is generated by the bending deformations, which leads to damage of the structure.

Also compression by bending and folding over the rim flange generates a large compression stress in the carcass cords of the bead and the repetition of this compression stress leads to breakage of carcass cords. The concentration of the stresses at the broken edges lower the strength of the carcass cords and the rubber itself, which leads to damage of the bead.

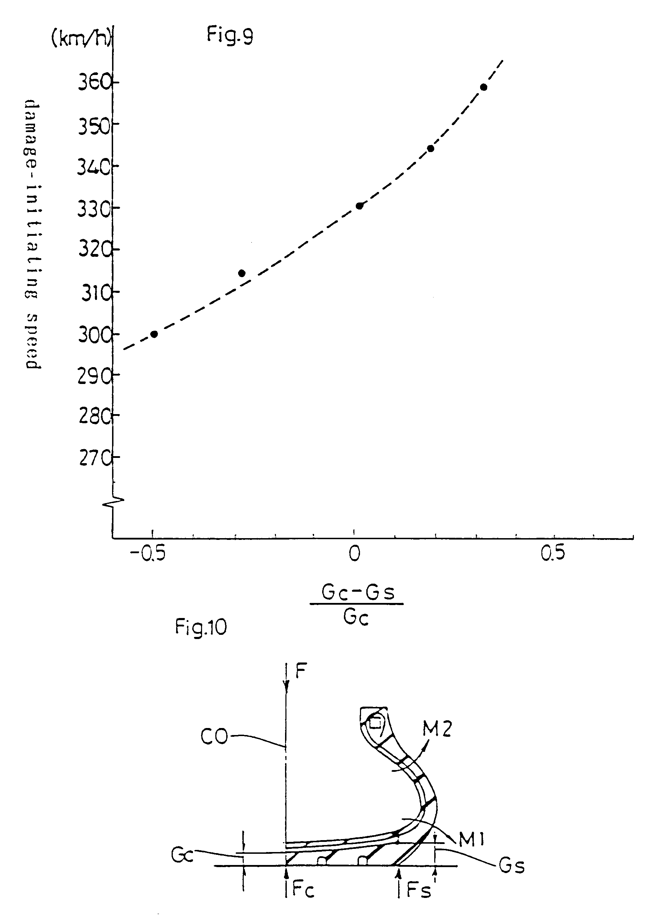

Therefore, in order to prevent the damage of the bead it is primarily important to decrease deformation. As shown in Fig.10, deformation of the bead is generated by a bending moment M2 which is created by the radial force Fs, acting on the shoulder of the tread and acting on the bead part by the bending moment M1 created at the side wall part of the tread.

Therefore, in order to diminish the bending moment M2 to consequently diminish the deformation in the bead, it may be considered to increase the internal pressure of the tyre, to decrease the rigidity of the side wall or to diminish the force Fs which acts on the shoulder part.

However, if the rigidity of the side wall is reduced to diminish the bending moment M2 acting on the bead, the transversal rigidity and the strength of the tyre tend to decrease consequently. If internal pressure is increased, the performance of the tyre decreases due to an increased deflation bounce and the balance of the tyre becomes worse, which leads to shortening of its life.

On the other hand, in the conventional tyre, as shown in Fig. 10, the thickness of the shoulder part of the tread Gs is set to be larger compared with the thickness of the tread part Gc on the equator of the tyre CO. As a result, the bending rigidity at the shoulder becomes larger, which increases, out of the total force F of the ground contact pressure distribution at the ground contact surface, the force Fs acting on the shoulder part relatively, thus the bending moment M1 and then the bending moment M2.

From this point of view, finding that, in order to decrease the force Fs acting on the shoulder part, by increasing the force Fc at the crown part, out of the total load F which is the total force at the ground contact surface, then the force Fs in the shoulder can be relatively decreased, the present inventors have developed this invention. It is a primary object of the invention to provide a novel high speed radial tyre in which the force Fs acting on the shoulder part is decreased and thus the deformations in the bead are reduced and hence improve the durability of the bead part.

The nearest coming prior art document is EP-A-321730, which falls within the terms of Article 54(3) EPC and thus is not relevant to the question of inventive step of the present invention. This document discloses a low profile radial tyre which is improved in grip and steering ability at high speed. The tyre has an aspect ratio of 45% to 55% and has a rubber tread which decreases in thickness gradually from the circumferential equator towards both edges of a belt ply according to two disclosed relationships.

According to the present invention a high speed radial tyre comprises a carcass of carcass cords at an inclination of 70 to 90 degrees to the equator of the tyre and a belt layer, wherein the thickness ratio (Gc- Gs)/Gc, that is, the ratio of the difference between the crown tread thickness Gc, which is the thickness of the tread at the equator of the tyre, and the shoulder tread thickness Gs, which is the thickness of the tread at the outer edge of the ground contact surface in the direction of the tyre axis, at a position where the ground contact surface in the direction of the tyre axis is of the widest width, when mounted on a regular rim, inflated with a specified internal pressure and loaded to its specific load, to the crown tread thickness Gc, is greater than 0 and not more than 0.8, and a bead core is positioned in each of two beads such that the ratio X/H, where X is the distance from the bead heel point P1 to the inward end P2 in the axial direction of the bead core and H is the height of the rim flange from the heel point P1 to the upper end P3 of the rim flange, is in the range of 0.8 to 1.05, and the ratio Y/H, where Y is the distance from the line L drawn in the direction of the tyre axis through the upper end point P3 of the rim flange to the outward end P4 in the radial direction of the bead core, is in the range of 0 to 0.3.

By setting the thickness ratio (Gc-Gs)/Gc to be greater than 0, the shoulder tread thickness Gs of the ground contact surface at the widest contact surface position is always equal to or less than the crown tread thickness Gc, which reduces the rigidity of that part, and the force Fc in the crown part in the radial direction is then relatively increased, and as result, the force Fs acting on the shoulder part in the radial direction is decreased.

By setting the ratio (Gc-Ga)/Gc to be not more than 0.8, the shoulder tread thickness Gs is prevented from being excessively smaller than the crown tread thickness Gc, which prevents the strength and the wear resistance in the shoulders from being decreased.

Whilst the ratio (Gc-Gs)/Gc is specified as being greater than 0 a preferred minimum is 0.1.

Therefore, by setting the ratio (Gc-GS)/Gc to be within the specific range, the force Fs acting in the radial direction on the widest ground contact surface position of the ground contact surface S can be reduced without impairing the durability of the shoulders themselves and, thus, by the resultant decrease in the bending moment M2 acting on the bead part and the reduced deformation in the bead part, damage in the bead part can be prevented.

When the invention is used in combination with a belt layer with plural plies inclined by 0 to 20 degrees to the equator of the tyre, the hoop effect of the belt is increased and inflation to high internal pressure becomes possible, which makes the tyre particularly usable for aircraft.

Alternatively, by using metallic belt cords for the belt layer and plural plies of the cords inclined by 20 to 40 degrees to the equator of the tyre, the belt layer can be formed in a triangular construction with its rigidity increased, the rolling resistance and the wear rate decrease, and the turning stability increases, which makes the tyre particularly usable for high speed passenger cars especially. It is then also preferable to have an aspect ratio of 60% or less and the tyre can successfully be used at speeds exceeding 300km per hour. Embodiments will now be disclosed by way of example only in conjunction with the attached drawings in which:
Fig.1. is a sectional view showing of an aircraft tyre
Fig.2. is a sectional view showing the ground contact state as well as the ground contact surface,
Fig.3. is a sectional view showing the bead part,
Fig.4. is a sectional view showing a bead part,
Fig.5. is a perspective view showing belt cord extension.
Fig.6 is a diagram showing the expansion of the tread surface due to inflation with internal pressure,
Fig.7 is a diagram showing the relation between the ratio (Gc-Gs)/Gc and temperature increase,
Fig.8 is a sectional view of a car tyre according to the invention
Fig.9 is a diagram showing the results measured in relation to the ratio (Gc-Gs)/Gc and the damage initiating speed, and
Fig.10 is a sectional view showing a change of shape of a prior art tyre.

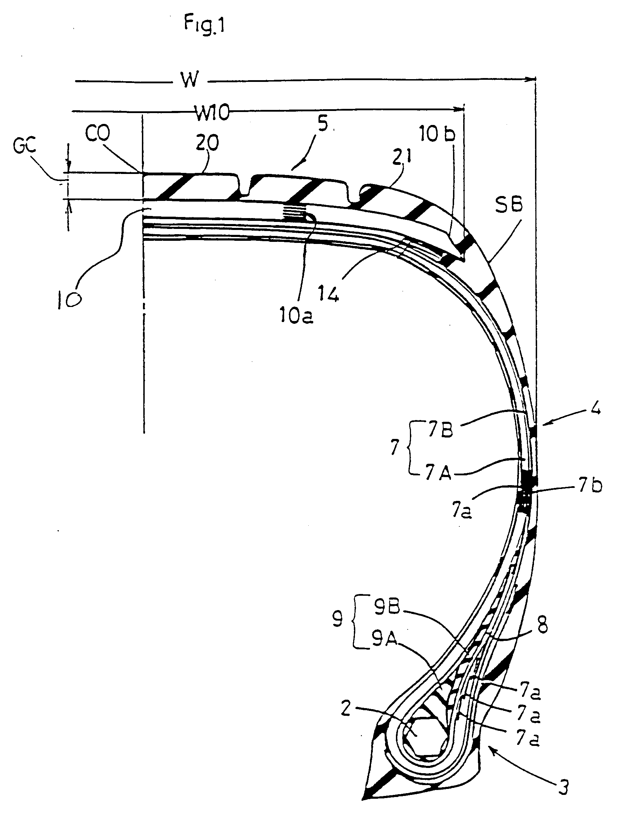

In Fig.1 a high speed aircraft radial tyre 1 shown inflated comprises a bead 3 with a annular bead core 2 through it, a side-wall 4 connected to the bead 3 and extending outwardly in the radial direction of the tyre to a tread 5 connecting the outer ends of the two side walls 4.

The tyre 1 has a carcass 7 comprising an inner layer 7A composed of four carcass plies 7a... which wrap around the bead core 2 from the inside to the outside of the tyre and an outer layer 7B composed of two carcass plies 7b which enclose the inner layer 7A and are wrapped from the outside to the inside of the tyre. Each carcass cord of the carcass plies 7a and 7b is positioned in the radial direction at an inclination of 70 to 90 degrees to the equator of the tyre and between adjacent carcass plies the cord are mutually crossed and inclined in the radial direction of the tyre.

At the surface of the carcass 7 nearer to the bead core, a covered layer 8 is provided to prevent abrasion of the carcass 7 caused by cyclic movement which draws it around the bead core 2 under the repeated deformations of the tyre. Above the bead core 2 there is a tapered rubber bead apex 9 extending over the upper end of the covered layer 8, thus increasing the rigidity and dispersing stresses by the deflection of the folded part of the carcass. The bead apex 9 comprises a lower part 9A made of a hard rubber and a higher part 9B made of a soft rubber. Finally on the axially outer surface of the bead 3 which contacts the wheel rim flange there is a chafer (not shown) which prevents rim chafing. The tread 5 is reinforced by a belt layer 10 positioned outside the carcass 8 in the radial direction and between the belt 10 and the carcass 7, there is a split breaker 14.

The belt 10 comprises a plurality of six to ten belt plies 10a and these plies gradually reduce in width in the outward radial direction so that the belt 10 forms a trapezoid in cross section and its side or edge surface 10b is inclined nearly along the outer surface SB of the tyre buttress. The widest width W10 of the belt layer, i.e. the width of the inner ply 10a in the embodiment, is set to be within the range of 75 to 85% of the overall tyre width W.

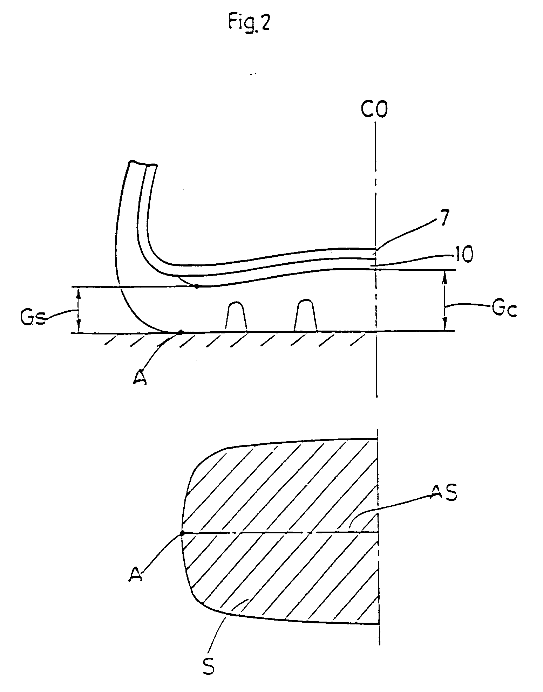

As shown in Fig.2 the thickness ratio (Gc-GS)/Gc, that is, the ratio of the difference between the crown tread thickness Gc, which is the thickness of the tread 5 at the equator CO of the tyre, and the shoulder tread thickness Gs, which is the thickness of the tread 5 of the ground contact surface S at the outer edge A in the direction of the tyre axis at the position AS where the ground contact surface S in direction of the tyre axis is of the widest width when mounted on a regular rim, inflated with a specified internal pressure and loaded with a specified load, Gc - Gs to the crown tread thickness Gs is set to be greater than 0 and not more than 0.8.

The shoulder tread thickness GS is defined as the distance in the radial direction from the outer edge A of the ground contact surface S to the side edge of the belt layer 10.

Thus by setting the thickness ratio (Gc - Gs)/Gs to be greater than 0, the shoulder tread thickness Gs becomes less than the crown tread thickness Gc, which reduces the rigidity in the shoulder part and relatively increases the force Fc in the radial direction in the crown part 20. As a result, the force Fs in the shoulder part acting in the radial direction at the outer edge A of the ground contact surface S is reduced.

If, however, the thickness ratio (Gc-Gs)/Gc is made greater than 0.8, the shoulder tread thickness Gs becomes excessively small compared with the crown tread thickness Gc, which causes strength and wear resistance in the shoulders to be prejudiced.

By setting the ratio (Gc-Gs)/Gc to be within the specified range, the force Fs acting in the radial direction on the outer edge A of the widest ground contact surface position AS of the ground contact surface S can be decreased without impairing the durability of the shoulder part and this decreases the bending moment M2 acting on the bead part 3 reducing the deformations in the bead part and, as a result, prevents the bead part from being damaged.

A more preferable thickness ratio (Gc-Gs)/Gc is 0.1 to 0.5, and still more preferably, it is 0.1 to 0.3.

The width of the cut breaker 14 can be larger or smaller than the tread width.

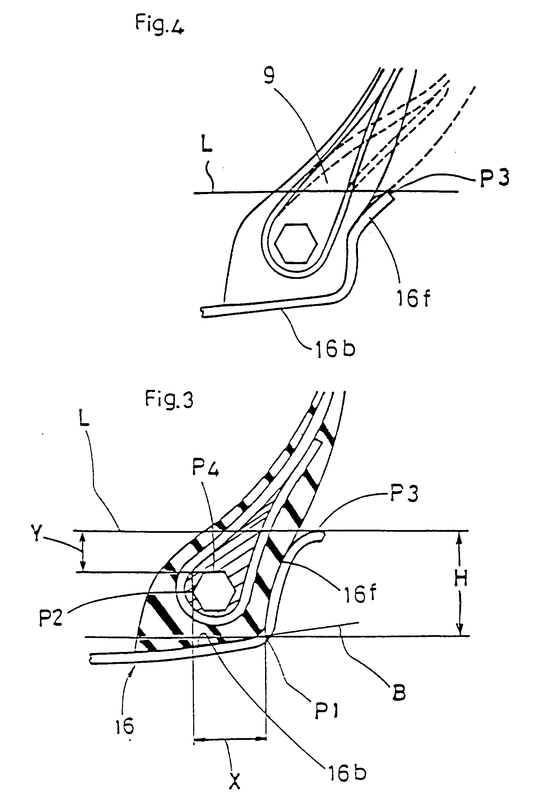

In the bead core 2, as shown in detail in Fig.3, the ratio X/H is 0.8 to 1.05. Distance X is the distance from the bead heel point P1 (the intersection point of an extension of a rim base line B of the rim 16 and an extension of the inner surface of the rim flange 16f) to the inward end P2 in the axial direction of the bead core 2. Distance height H is the rim flange height which is the distance from the bead heel point P1 in the radial direction to the upper end P3 of the rim flange 16f.

The outward end P4 of the bead core 2 in the radial direction is positioned a distance Y radially inwards of a line L drawn in the direction of the tyre axis through the upper end point P3 of the rim flange 16f. The ratio Y/H of a distance Y in the radial direction from the line L to the outward end P4 to the height H is 0 to 0.3.

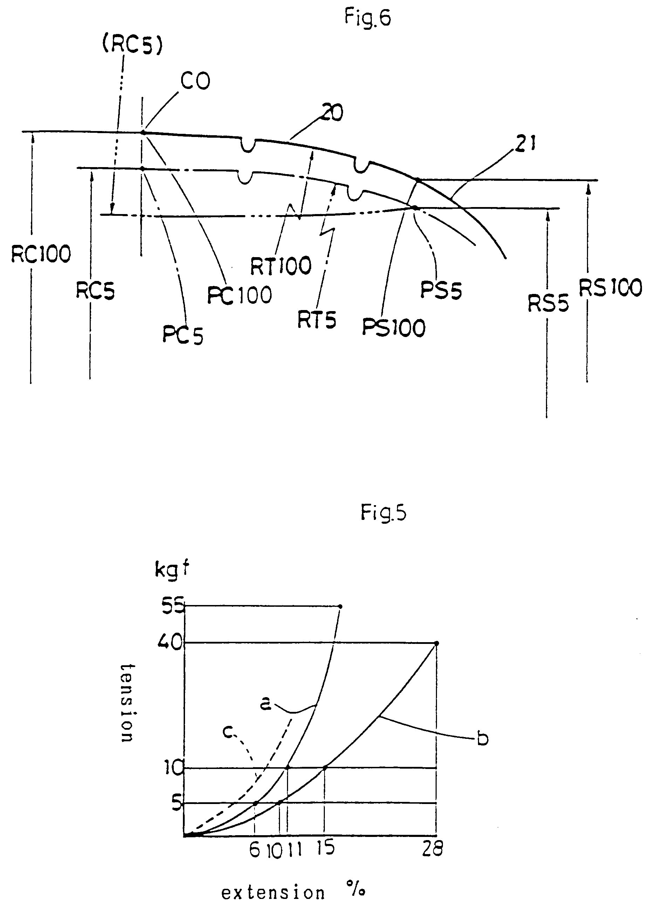

In a radial tyre for aircraft, when receiving a load, in the bead part 3 in the section which includes the tyre axis, as shown by dotted lines in Fig.4, a bending deformation is created radially outside the line L drawn in the direction of the tyre axis at the upper end P3 of the rim flange 16f, and repeated deformations, especially in the bead apex 9, generates heat. If, however, the shape of the bead apex 9 is made close to the deformed shape under loading, the deformation and the generation of heat of the bead apex 9 due to loading can be diminished.

The bead apex 9, as already described, has a tapered sectional shape, and the shape of its base part, where the deformation and the generation of heat due to loading are the problems, is mostly determined according to the relative positioning of the bead core 2 and the rim 16. Therefore, by setting the ratios on the bead core 2, X/H and Y/H, within said ranges, the shape of the bead apex 9 which can restrain the deformation and the generation of heat can be obtained.

The ratio X/H for this purpose is 0.80 or more, preferably 0.85 or more. If it is less than 0.80, it cannot achieve the purpose. If the ratio X/H exceeds 1.05, the volume of the bead 3 becomes too large, and the bead core 2 is too distant from the rim flange 16f, which adversely affects the durability and the tyre fitting on the rim, as well as making production difficult. More preferably the ratio X/H is 1.0 or less.

If the ratio Y/H exceeds 0.30, the purpose can not be achieved, and if it is less than 0 where the end P4 in the radial direction of the bad core 2 is positioned outside in the radial direction of the line L, the flexing of the carcass 7 concentrates around the outward end P4 in the radial direction of the bead core 2, which destroys the carcass 7 itself.

Thus, by diminishing the deformation of the bead apex 9 upon loading, the generation of heat in the bead apex 9, where it is generally inevitable to use rubber having a high heat generating property, can be decreased, and thus restrains the temperature increase of the bead part 3 while running as well as diminishing the shearing strain created at the winding part of the carcass 7 and in the reinforcement layers, which improved the constructive permanence of the bead part.

In this embodiment, for carcass cords, elastic cords having high stretchability are used as well as for the belt cords forming the belt ply 10a.

The elastic cord expands by 5 to 10% upon 5kgf loading, 9 to 15% upon 10 kgf loading, 28% or less upon breakage, and has an initial elasticity modulus of 130 to 200 kgf/mm² . Such an elastic cord has characteristics within the range enclosed by the curves a and b shown in Fig.5, the initial elasticity modulus means an elasticity modulus when the expansion is 6 to 7%. In the elastic cord shown by curve a, the load upon breakage i.e. the strength of the cord is normally about 55 kgf, and in the elastic cord shown by curve b, the strength of the cord is about 40 kgf. As clearly known from the curves a and b, an elastic cord has characteristics that the expansion rate is larger at smaller loads, and the expansion ratio decreases as the load increases and the expansion upon breakage is set to be 28% or less as described above. It is evident from the above figures that the elastic cord has an expansion of 10 to 11% in a range of 16 to 25% of the strength of the cord. It is obvious that a conventional cord, as shown by curve c, shows larger figures compared with the curve a and forms almost a straight line.

For the elastic cord, a combined cord of one or plural types of nylon cords, polyester cords, aromatic polyamide cords, carbon cords or metallic cords is used.

Moreover, a cord having such material characteristics can be obtained by applying a remarkably less tension upon dip stretch, which is a prior application of a tension and heat to a cord depending on time when using an organic fibre cord, than the tension used in a conventional dip stretch. In order to further improve the characteristics, when using a nylon cord, for example, the number of twists per 10cm should be 25 to 36 T/10 cm and more preferably, 27 to 35 T/10cm, which is an increase compared with the conventional number of twists of approximately 23 T/10 cm.

By using such an elastic cord for the carcass cord, it was proved that it is possible to form a tyre which has carcass cords expanded by 6% or more, preferably about 8 to 9% when inflated with a specified internal pressure.

As in this embodiment, in the case that the carcass 7 comprises an inner layer 7A and an outer layer 7B, by using an elastic cord having the above characteristics, the compression strength of the carcass ply 7b of the outer layer 7B is increased, and for the carcass cord of the inner ply 7a, by using a cord which expands less than 5% kg loading, less than 8% upon 10 kgf loading, less than 20% upon breakage and has an initial elasticity modulus of 200 kgf/cm² or more, it is possible to prevent a breakage of carcass cords of the outer layer 7B and to improve the durability of the bead part as well.

The carcass cord and the belt cord are buried in a base rubber or topping compound to form the carcass plies 7a, 7b and the belt ply 10a. For the rubber a high performance rubber is used, as having JIS standard hardness A of 60 to 80 degrees, 100% modulus of 30 to 60 kg/cm², a stress upon breakage of 150 to 300 kgf/cm² and expansion upon breakage of 300 to 600%.

By using a rubber having such characteristics for the topping compound or base rubber, the expansion of the carcass cord and the belt cord becomes easy, pre-tension in the bead part is added, bulging of the tread part 5 becomes easy and due to the high expansion upon breakage, the durability of the bead increases.

The cut breaker ply 14a has the same construction as the belt ply 10a.

In a high speed radial tyre of the invention as shown in Fig.6 the ratio RC100/RC5 is 1.06 or more, which is the ratio of the radius RC100 passing the standard crown point PC100 of the tread surface on the equator of the tyre CO upon inflating with a specified internal pressure to the radius RC5 passing the 5% crown point PC5 of the tread surface on the equator of the tyre C upon inflating with a 5% internal pressure of the specified internal pressure.
Moreover, the ratio (RC100 - RS100)/RC100 of the difference between the radius RC100 and the radius RS100 passing the standard shoulder point PS100 of the end edge of the crown part 20 of the tread surface in direction of the tyre axis, RC100 - RS100 to the radius RC100, is 0.02 or more.

In the high speed tyre 1, the crown part 20 is wide in width reaching 60 to 90% of the tread part 5, so that by setting the ratios as described above, compared with the shoulder part 21, at the standard crown point PC100 in the middle of the crown part 20, the bulging becomes greater.

Thus by giving a greater bulging in the crown part 20 and increasing the belt tension of that part, the ground contact pressure of the crown part increases, which relatively increases the force Fc acting in the radial direction to the crown part 20, and thus relatively reduces the force Fs of the shoulder part.

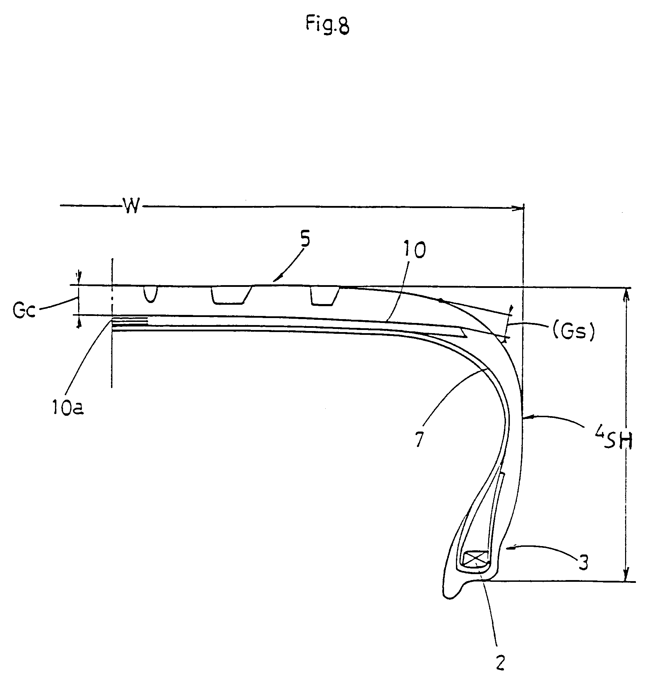

Fig.8 shows an embodiment for a high speed passenger car in the inflated state.
The tyre 1, compared with the first embodiment uses steel cords for the belt cords of the belt layer 10, comprises plural plies 10a of the cords having an inclination of 20 to 40 degrees to the equator of the tyre. By varying the inclining direction in each ply 10a, the belt layer 10 has a so called triangle construction, thus increasing the sidewall rigidity and thus the turning performance is maintained. In this tyre 1, upon inflating with a specified internal pressure, the ratio SH/W of the height SH from the bottom bead surface to the highest point of the tread surface on the equator of the tyre to the widest width of the tyre W, that is the aspect ratio, is made to be 0.6 or less. Thus, the side rigidity is further increased and the tyre is preferably used for passenger cars which run at a speed exceeding 300 km per hour. By setting the thickness ratio (Gc - GS)/Gc in this tyre to be within the range of the invention the force Fs acting in the radial direction on the shoulder part is reduced, deformation of the bead is diminished, which prevents the bead from being damaged, and the life of the tyre becomes longer. Examples of the invention were then made as follows:-
Radial tyres for aircraft were produced in a tyre size of 46 X 17R20 and with different ratios (Gc - Gs)/Gc. The tyre having the construction as shown in Fig.1, in a condition mounted on a regular rim, inflated with a specified internal pressure and loaded with a specified load, was placed on a bench drum tester and the temperature of the bead apex was measured after running for 10 minutes at a rotary speed equivalent to 300 km/h. When the ratio (Gc - GS)/ Gc is 0, the temperature is indicated as an index 100.

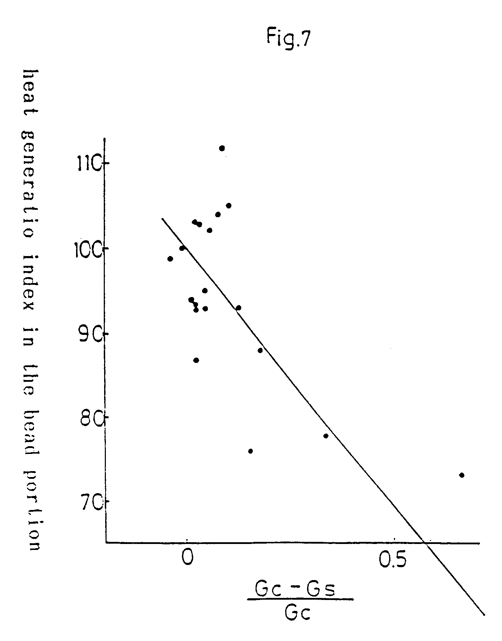

From Fig.7 it is clearly shown that the temperature decreases as the ratio (Gc-Gs)/Gc increases.

Tyres for high speed passenger cars according to the invention were produced in a tyre size of 235/45R17 and with varying ratios (Gc - Gs)/Gs. When mounted on a regular rim, loaded with a specified load, inflated with a specified internal pressure, 2.7 kg/cm² , and with one degree of the camber angle, the tyre was tested to check the damage initiating speed on a bench drum tester, and the results are shown in Fig.9. After driving at a speed for 20 minutes, the speed was increased by 10km/h steps, and the speed at which the bead was damaged was noted. As shown in the figure, in a range where the ratio (Gc-Gs)/Gc is 0.1 to 0.8 it is shown that the damage initiating speed of the bead exceeds 320 km/h.

Thus by setting the thickness ratio (Gc - Gs)/Gc as specified the force Fs acting in the radial direction on the shoulder, especially on the widest ground contact surface position of the ground contact surface S, can be reduced without impairing the durability of the shoulder part, and, thus, by decreasing the bending moment acting on the bead part and diminishing the deformation in the bead part, the damages in the bead part can be prevented.

Furthermore, in the case of the aircraft tyre by forming the belt layer with plural plies of belt cords inclined by 0 to 20 degrees against the equator of the tyre, the hoop effect of the belt is increased and the high internal pressure inflation required becomes possible, which makes the tyre fully usable for aircraft.

In the second case by using metallic belt cords for the belt layer and plural plies of the cord inclined by 20 to 40 degrees against the equator of the tyre, the belt layer can be formed in a triangular construction, its rigidity increases, the rolling resistance and the wearing decreases, and the turning stability increases, which makes the tyre fully usable for high speed passenger cars especially when used with an aspect ratio of 60% or less and at running speeds exceeding 300km per hour.

## Claims

1. A high speed radial tyre comprising a carcass (7) of carcass cords at an inclination of 70 to 90 degrees to the equator of the tyre and a belt layer (10) wherein the thickness ratio (Gc-Gs)/Gc, that is, the ratio of the difference between the crown tread thickness Gc, which is the thickness of the tread at the equator of the tyre, and the shoulder tread thickness Gs, which is the thickness of the tread at the outer edge of the ground contact surface in the direction of the tyre axis, at a position where the ground contact surface in the direction of the tyre axis is of the widest width, when mounted on a regular rim, inflated with a specified internal pressure and loaded to its specific load, to the crown tread thickness Gc, is greater than 0 and not more than 0.8, and a bead core (2) is positioned in each of two beads such that the ratio X/H, where X is the distance from the bead heel point P1 to the inward end P2 in the axial direction of the bead core (2) and H is the height of the rim flange (16f) from the heel point P1 to the upper end P3 of the rim flange (16f), is in the range of 0.8 to 1.05, and the ratio Y/H, where Y is the distance from the line L drawn in the direction of the tyre axis through the upper end point P3 of the rim flange (16f) to the outward end P4 in the radial direction of the bead core (2), is in the range of 0 to 0.3.

2. A tyre according to claim 1 characterised in that the ratio Gc-Gs/Gc is in the range of 0.1 to 0.8.

3. A tyre according to claim 1 characterised in that the ratio Gc-Gs/Gc is in the range of 0.1 to 0.3.

4. A tyre according to any one of claims 1 to 3 characterised in that the belt layer (10) comprises a plurality of plies (10a) of reinforcement cords inclined at 0 to 20 degrees to the tyre equator.

5. A tyre according to claim 4 characterised in that the ratio of the radius RC100 at the standard crown point PC100 on the tread surface when inflated to the specified internal pressure to the radius RC5 through the 5% crown point PC5 when the tyre is inflated to 5% of said pressure is 1.06 or more.

6. A tyre according to any one of claims 1 to 3 characterised in that the belt layer (10) comprises two or more plies (10a) of reinforcement inclined at 20 to 40 degrees to the tyre equator.

7. A tyre according to claim 6 characterised in that the aspect ratio of the tyre SH/W is 60% or less.

## Patentansprüche

1. Ein Hochgeschwindigkeits-Radialreifen mit einer Karkasse (7) aus Karkaßkorden unter einer Neigung von 70 bis 90 Grad gegen den Äquator des Reifens und einer Gürtelschicht (10), worin das Dickenverhältnis (Gc - Gs)/Gc, das heißt das Verhältnis der Differenz zwischen der Scheitel-Laufflächendicke Gc, welche die Dicke der Lauffläche bei dem Äquator des Reifens ist, und der Schulter-Laufflächendicke Gs, welche die Dicke der Lauffläche bei der äußeren Kante der Bodenkontaktoberfläche in der Richtung der Reifenachse ist, bei einer Position, wo die Bodenkontaktoberfläche in der Richtung der Reifenachse die größte Breite besitzt, wenn er auf einer regulären Felge montiert, auf einen spezifizierten Innendruck aufgeblasen und seiner spezifizierten Last ausgesetzt ist, zu der Scheitel-Laufflächendicke Gc, größer als 0 ist und nicht mehr als 0,8 beträgt und ein Wulstkern (2) in jedem von zwei Wulsten derart angeordnet ist, daß das Verhältnis X/H, wo X der Abstand von dem Wulst-Abrundungspunkt P1 zu dem inneren Ende P2 in der axialen Richtung des Wulstkerns (2) ist und H die Höhe des Felgenflansches (16f) von dem Abrundungspunkt P1 zu dem oberen Ende P3 des Felgenflansches (16f) ist, in dem Bereich von 0,8 bis 1,05 liegt und das Verhältnis Y/H, wo Y der Abstand von der Linie L, die in der Richtung der Reifenachse durch den oberen Endpunkt P3 des Felgenflansches (16f) zu dem äußeren Ende P4 in der radialen Richtung des Wulstkerns (2) gezogen ist, in dem Bereich von 0 bis 0,3 liegt.

2. Ein Reifen nach Anspruch 1, dadurch gekennzeichnet, daß das Verhältnis (Gc - Gs)/Gc in dem Bereich von 0,1 bis 0,8 liegt.

3. Ein Reifen nach Anspruch 1, dadurch gekennzeichnet, daß das Verhältnis (Gc - Gs)/Gc in dem Bereich von 0,1 bis 0,3 liegt.

4. Ein Reifen nach irgendeinem der Ansprüche 1 bis 3, dadurch gekennzeichnet, daß die Gürtelschicht (10) eine Vielzahl von Lagen (10a) von Verstärkungskorden aufweist, die unter 0 bis 20 Grad gegen den Reifenäquator geneigt sind.

5. Ein Reifen nach Anspruch 4, dadurch gekennzeichnet, daß das Verhältnis des Radius RC100 bei dem Standard-Scheitelpunkt PC100 auf der Laufflächenoberfläche, wenn er auf den spezifizierten Innendruck aufgeblasen ist, zu dem Radius RC5 durch den 5%-Scheitelpunkt PC5, wenn der Reifen auf 5% des Druckes aufgeblasen ist, 1,06 oder mehr beträgt.

6. Ein Reifen nach irgendeinem der Ansprüche 1 bis 3, dadurch gekennzeichnet, daß die Gürtelschicht (10) zwei oder mehr Verstärkungslagen (10a) aufweist, die unter 20 bis 40 Grad gegen den Reifenäquator geneigt sind.

7. Ein Reifen nach Anspruch 6, dadurch gekennzeichnet, daß das Längenverhältnis SH/W des Reifens 60% oder weniger beträgt.

## Revendications

1. Pneumatique à carcasse radiale pour vitesses élevées, comprenant une carcasse (7) formée de câblés ayant une inclinaison de 70 à 90° par rapport à l'équateur du pneumatique et une couche de ceinture (10), dans lequel le rapport d'épaisseur (Gc - Gs)/Gc, c'est-à-dire le rapport de la différence entre l'épaisseur Gc de la bande de roulement au sommet, qui est l'épaisseur de la bande de roulement à l'équateur du pneumatique, et l'épaisseur Gs de la bande de roulement à l'épaulement, qui est l'épaisseur de la bande de roulement au bord externe de la surface de contact avec le sol dans la direction de l'axe du pneumatique, à une position à laquelle la surface de contact avec le sol dans la direction de l'axe du pneumatique a sa plus grande largeur, lorsque le pneumatique est monté sur une jante normale, est gonflé à la pression interne spécifiée et est sous l'action de la charge spécifiée, et de l'épaisseur Gc de la bande de roulement au sommet, est supérieur à 0 et ne dépasse pas 0,8, et une tringle (2) est placée dans chacun de deux talons afin que le rapport X/H, X étant la distance comprise entre le point P1 de la pointe de talon et l'extrémité interne P2 dans la direction axiale de la tringle (2) et H étant la hauteur du flasque (16f) de la jante entre le point P1 de la pointe de talon et l'extrémité supérieure P3 du flasque (16f) de la jante, soit compris entre 0,8 et 1,05, et que le rapport Y/H, Y étant la distance comprise entre la droite L tracée dans la direction de l'axe du pneumatique et passant par le point d'extrémité supérieure P3 du flasque (16f) de la jante et par l'extrémité externe P4 dans la direction radiale de la tringle (2), soit compris entre 0 et 0,3.

2. Pneumatique selon la revendication 1, caractérisé en ce que le rapport (Gc - Gs)/Gc est compris entre 0,1 et 0,8.

3. Pneumatique selon la revendication 1, caractérisé en ce que le rapport (Gc - Gs)/Gc est compris entre 0,1 et 0,3.

4. Pneumatique selon l'une quelconque des revendications 1 à 3, caractérisé en ce que la couche (10) de ceinture comprend plusieurs nappes (10a) de câblés de renforcement inclinés d'un angle de 0 à 20° par rapport à l'équateur du pneumatique.

5. Pneumatique selon la revendication 4, caractérisé en ce que le rapport du rayon RC100 au point normalisé de sommet PC100 de la surface de la bande de roulement, lorsque le pneumatique est gonflé à la pression interne spécifiée, au rayon RC5 passant par le point PC5 de sommet à 5 % lorsque le pneumatique est gonflé à 5 % de la pression, est supérieur ou égal à 1,06.

6. Pneumatique selon l'une quelconque des revendications 1 à 3, caractérisé en ce que la couche (10) de ceinture comprend au moins deux nappes (10a) d'armature inclinées d'angles compris entre 20 et 40° avec l'équateur du pneumatique.

7. Pneumatique selon la revendication 6, caractérisé en ce que le rapport d'allongement du pneumatique SH/W est inférieur ou égal à 60 %.
